(19) Europäisches Patentamt
European Patent Office
Office européen des brevets

(11) Veröffentlichungsnummer: **0 532 939 B1**

(12) **EUROPÄISCHE PATENTSCHRIFT**

(45) Veröffentlichungstag der Patentschrift: **18.10.95**

(51) Int. Cl.[6]: **C08J 9/00**, C08K 5/32, C08K 5/20, //C08L75/04

(21) Anmeldenummer: **92114357.4**

(22) Anmeldetag: **22.08.92**

# (54) Verfahren zur Herstellung von heisshärtenden, flexiblen, Urethangruppen aufweisenden Schaumstoffen mit verminderter Stauchhärte.

(30) Priorität: **06.09.91 DE 4129583**

(43) Veröffentlichungstag der Anmeldung: **24.03.93 Patentblatt 93/12**

(45) Bekanntmachung des Hinweises auf die Patenterteilung: **18.10.95 Patentblatt 95/42**

(84) Benannte Vertragsstaaten: **BE DE ES FR GB IT NL**

(56) Entgegenhaltungen:
**US-A- 3 173 896**
**US-A- 3 173 897**

(73) Patentinhaber: **Th. Goldschmidt AG**
**Goldschmidtstrasse 100**
**D-45127 Essen (DE)**

(72) Erfinder: **Burkhart, Georg, Dr.**
**Barkhovenallee 31**
**W-4300 Essen 16 (DE)**
Erfinder: **Klietsch, Bernd-Jürgen**
**Lübecker Strasse 56**
**W-4300 Essen 1 (DE)**
Erfinder: **Zellmer, Volker, Dr.**
**Trappenstrasse 68 a**
**W-4250 Bottrop (DE)**
Erfinder: **Diservi, Jean-Paul**
**20, Allée des Bleuets**
**F-78370 Plaisir (FR)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 532 939 B1

**Beschreibung**

Die Erfindung betrifft ein Verfahren zur Herstellung von heißhärtenden, flexiblen, Urethangruppen aufweisenden Schaumstoffen mit verminderter Stauchhärte durch Umsetzung von mindestens zwei Hydroxylgruppen aufweisenden Polyethern eines Molekulargewichtes von 400 bis 12 000 mit Polyisocyanaten in Gegenwart von Katalysatoren und Wasser und gegebenenfalls in Gegenwart von Emulgatoren, Stabilisatoren, Vernetzungsmitteln, Treibmitteln und üblichen Hilfs- und Zusatzstoffen. Das Verfahren ist dadurch gekennzeichnet, daß man das Verfahren in Gegenwart von 0,01 bis 3 Gew.-Teilen, bezogen auf 100 Gew.-Teile Polyol, Aminoxiden der allgemeinen Formel

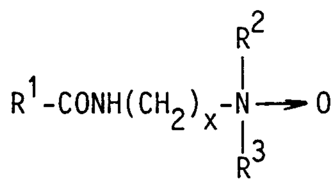

wobei

| | |
|---|---|
| $R^1$ | ein Alkylrest oder ein Gemisch von Alkylresten mit 7 bis 17 Kohlenstoffatomen ist, |
| $R^2$, $R^3$ | Alkylreste mit 1 bis 4 Kohlenstoffatomen sind und |
| x = | 2 oder 3 ist, |

durchführt.

Für das erfindungsgemäße Verfahren zur Herstellung von heißhärtenden Polyurethanweichschäumen mit verminderter Stauchhärte werden keine oder gegenüber üblichen Verfahren des Standes der Technik erheblich verminderte Mengen an physikalischen Treibmitteln, wie Fluorchlorkohlenwasserstoffen,Methylenchlorid, Pentan, Aceton und 1,1,1-Trichlorethan, benötigt.

Nach dem erfindungsgemäßen Verfahren werden ganz besonders Schäume durch Einbringen des schaumfähigen Reaktionsgemisches in eine geschlossene Form hergestellt.

Weichelastische Polyurethanschaumstoffe werden in breitem Umfang in der Polstermöbel- und Automobilindustrie verwendet. Für die verschiedenen Einsatzzwecke und die sich daraus ableitenden unterschiedlichen Qualitäten ist es notwendig, neben der Rohdichte in erster Linie die Stauchhärte über einen weiten Bereich variieren zu können.

Um Schaumstoffe mit erhöhter Stauchhärte herzustellen, hat man bereits inerte anorganische oder organische Füllstoffe eingesetzt. Die Stauchhärte kann auch durch Verwendung von sogenannten füllkörperhaltigen Polyolen, hergestellt durch Polymerisationsreaktionen von ungesättigten Monomeren bzw. Additionsreaktionen in den zur Verschäumung dienenden Polyolen, erhöht werden.

Eine Erniedrigung der Stauchhärte wird durch Mitverwendung physikalischer Treibmittel, wie z.B. Fluorchlorkohlenwasserstoffen oder Methylenchlorid, erreicht. Dem steht das Bestreben entgegen, aus Umweltgründen die Verwendung von Fluorchlorkohlenwasserstoffen möglichst weitgehend einzuschränken. Gleiches gilt für das physiologisch nicht unbedenkliche Methylenchlorid.

Dies trifft in gewissem Umfang auch auf die übrigen physikalischen Treibmittel zu, deren Emission etwa in der Bundesrepublik Deutschland durch die Technische Anleitung Luft und in vielen anderen Ländern in ähnlicher Weise stark eingeschränkt ist.

Die Rohdichte flexibler Polyurethanweichschaumstoffe liegt im allgemeinen zwischen 14 und 50 kg/m$^3$. Typische Werte für die Stauchhärte bei 40 %iger Stauchung sind 1,0 bis 6,0 kPa. Reduziert man die bei der Verschäumung eingesetzte Menge an physikalischem Treibmittel, so re-resultieren Schäume mit vergleichsweise höherer Dichte und Stauchhärte. Dieser Erhöhung der Dichte kann man durch Erhöhung der Menge des zugesetzten Wassers entgegenwirken, die Stauchhärte verbleibt hierbei jedoch auf dem unerwünscht hohen Niveau.

Der vorliegenden Erfindung liegt das technische Problem zugrunde, ein Verfahren zu finden, das es ermöglicht, unter Reduzierung des Anteils physikalischer Treibmittel, insbesondere an Fluorchlorkohlenwasserstoffen oder Methylenchlorid, und mit gegebenenfalls tolerierbarer Erhöhung des Wasserzusatzes flexible Polyurethanschäume mit - für das resultierende Raumgewicht - niedriger Stauchhärte herzustellen.

Aus der EP-A-0 358 282 ist es bekannt, daß man bei einem Verfahren der eingangs geschilderten Art die Menge an einzusetzenden Fluorchlorkohlenwasserstoffen reduzieren kann, wenn man die Verschäumung in Gegenwart von 0,001 bis 1 Gew.-Teilen, bezogen auf 100 Gew.-Teile Polyol, eines oder mehrerer unvernetzter, wasserlöslicher organischer Polyelektrolyte mit einem Molgewicht von 1000 bis 20 000 000

durchführt. Bevorzugt sollen als Polyelektrolyte Alkalisalze von Polyacrylaten eines Molgewichtes von 2000 bis 10 000 in Mengen von 0,01 bis 0,5 Gew.-Teilen je 100 Gew.-Teile Polyol verwendet werden.

In der DE-PS 40 29 081 ist ein ähnliches Verfahren beschrieben, bei dem die Verschäumung in Gegenwart von 0,01 bis 1,0 Gew.-Teilen, bevorzugt 0,05 bis 0,8 Gew.-Teilen, bezogen auf 100 Gew.-Teile Polyol, eines oder mehrerer Alkalisalze von speziellen Hydroxycarbonsäuren durchgeführt wird.

Allen Produkten ist gemeinsam, daß sie bei der kontinuierlichen Produktion von Polyurethanschäumen nach dem Blockschaumverfahren die Herstellung heißhärtender Weichschaumstoffe mit deutlich verminderter Stauchhärte gestatten, ohne daß es dabei von der verarbeitungstechnischen Seite her zu Problemen kommt. Eine negative, nicht zu akzeptierende Beeinflussung der übrigen physikalischen Schaumeigenschaften findet darüber hinaus nicht statt.

Für die Herstellung heißhärtender Polyurethanweichschaumstoffe nach dem Formschaumverfahren sind die beschriebenen Produkte jedoch weniger gut geeignet. Trotz ebenfalls deutlicher Verminderung der Stauchhärte neigen die hergestellten Formschäume stark zur Geschlossenzelligkeit und als Folge davon zum Schrumpf. Das sogenannte Verarbeitungsspiel wird demnach durch die Verwendung derartiger weichmachender Additive stark eingeschränkt, dem auch durch eine Anpassung in der Katalyse als in einem derartigen Fall üblichen Maßnahme nicht entgegengewirkt werden kann.

Darüber hinaus weisen die Formschäume einen nicht tolerierbaren, stark erhöhten Druckverformungsrest auf. Der Druckverformungsrest erlaubt Aussagen zum Langzeitverhalten von Schäumen in der Praxis bei ständiger und wechselnder Belastung. Es werden möglichst niedrige Werte angestrebt, die dauerhaft hohe Gebrauchseigenschaften der Schäume erwarten lassen.

Der vorliegenden Erfindung liegt die Lösung des technischen Problems zugrunde, ein Verfahren zur Herstellung von heißhärtenden, flexiblen Polyurethanweichschäumen zu finden, bei dem

a) die Verwendung physikalischer Treibmittel allgemein, insbesondere aber Fluorchlorkohlenwasserstoffen und auch Methylenchlorid, vermieden oder zumindest erheblich eingeschränkt werden kann,

b) die resultierenden Schäume das gewünschte niedrige Raumgewicht bei verminderter Stauchhärte aufweisen,

c) die Herstellung sowohl nach dem Block- als auch dem Formschaumverfahren möglich ist, ohne daß durch das Verfahren Verarbeitungsprobleme auftreten und ohne daß eine negative Beeinflussung des Druckverformungsrestes erfolgt.

Vorzugsweise verwendet man bei dem erfindungsgemäßen Verfahren 0,01 bis 1,5 Gew.-Teile Aminoxid.

Der Rest $R^1$ leitet sich vorzugsweise von natürlich vorkommenden Fettsäuren der allgemeinen Formel $R^1COOH$ oder deren Gemischen ab. Besonders bevorzugt sind Fettsäuren vom Typ der Kokosfettsäure, wobei gegebenenfalls aus dem Gemisch der Fettsäuren die niederen Fettsäuren mit weniger als 10 Kohlenstoffatomen destillativ entfernt sind. Es können jedoch auch die reinen Fettsäuren, wie die Laurin-, Palmitin-, Myristin- oder Stearinsäure, zur Herstellung des Aminoxids verwendet werden.

Die Reste $R^2$ und $R^3$ sind vorzugsweise geradkettige Alkylreste mit 1 bis 4 Kohlenstoffatomen, wobei die Methylreste bevorzugt sind.

x hat vorzugsweise einen Wert von 3.

Die erfindungsgemäß zu verwendenden Aminoxide können in dem Fachmann bekannter Weise durch Oxidation der Fettsäureamiddialkylamine mit wäßrigen $H_2O_2$-Lösungen hergestellt werden.

Zur Durchführung des erfindungsgemäßen Verfahrens ist es zweckmäßig, eine konzentrierte wäßrige Lösung der erfindungsgemäß zu verwendenden Aminoxide herzustellen. Diese wird dann bei der Durchführung des Verfahrens separat oder der sogenannten Aktivatorlösung, bestehend aus Wasser, Stabilisator und Aminkatalysator, oder dem Polyol oder einer Teilmenge eines Polyols zugegeben. Die hierdurch in das System eingebrachte Wassermenge ist gering und kann überdies bei der für die Verschäumung benötigten Menge Wasser berücksichtigt werden.

Der Verarbeitungsspielraum innerhalb der Rezeptur ist ausreichend groß, um eine reproduzierbare Arbeitsweise mit reproduzierbaren Produkteigenschaften zu gewährleisten.

Durch den Zusatz der erfindungsgemäß zu verwendenden Aminoxide im angegebenen Konzentrationsbereich werden, abgesehen von der Stauchhärte, die übrigen Schaumeigenschaften, insbesondere der Druckverformungsrest, nicht entscheidend beeinträchtigt.

Im übrigen kann das Verfahren zur Herstellung der Polyurethanweichschäume in üblicher Weise und mit den aus dem Stand der Technik bekannten Ausgangsstoffen durchgeführt werden.

Für die Herstellung der Polyurethan-Weichformschaumstoffe werden als Polyisocyanate eingesetzt: Aliphatische, cyclophatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der allgemeinen Formel

$Q(NCO)_n$

in der

n = 2 bis 4, vorzugsweise 2, ist und

Q einen aliphatischen Kohlenwasserstoffrest mit 2 bis 18, vorzugsweise 6 bis 10 Kohlenstoffatomen, einen cyclophatischen Kohlenwasserstoffrest mit 6 bis 15, vorzugsweise 5 bis 10 Kohlenstoffatomen, einen aromatischen Kohlenwasserstoffrest mit 6 bis 15, vorzugsweise 6 bis 13 Kohlenstoffatomen oder einen araliphatischen Kohlenwasserstoffrest mit 8 bis 15, vorzugsweise 8 bis 13 Kohlenstoffatomen,

bedeutet.

Beispiele geeigneter Polyisocyanate sind in der DE-OS 28 32 253, Seiten 10 bis 11, beschrieben.

Bevorzugt werden beim erfindungsgemäßen Verfahren als Polyisocyanate verwendet:

Polyisocyanate vom Typ des Diphenylmethandiisocyanats und/oder des Toluylendiisocyanats, z.B. das 2,4- und 2,6-Toluylendiisocyanat, sowie das beliebige Gemisch dieser Isomeren (TDI), 4,4'- und/oder 2,4'-Diphenylmethandiisocyanat (MDI), Hexamethylendiisocyanat und/oder Isophorondiisocyanat, Polyphenylpolymethylenpolyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen und Biuretgruppen modifizierte Polyisocyanate, die sich von 2,4- und/oder 2,6-Toluylendiisocyanat bzw. vom 4,4'- und/oder 2,4'-Diphenylmethandiisocyanat ableiten, ferner alkylsubstituierte MDI-Typen, wie sie beispielsweise in der DE-OS 29 35 318 und der DE-OS 30 32 128 beschrieben werden.

Besonders bevorzugt sind:

Toluylendiisocyanat als Gemisch der 2,4- und 2,6-Isomeren im Verhältnis 80 : 20 (TDI 80),

Toluylendiisocyanat als Gemisch der 2,4- und 2,6-Isomeren im Verhältnis 65 : 35 (TDI 65),

Toluylendiisocyanat-Prepolymere,

Abmischungen von TDI mit Diphenylmethandiisocyanat und/oder Polyphenylpolymethylenpolyisocyanaten.

Die geeigneten mindestens zwei Hydroxylgruppen aufweisenden Polyether haben ein Molekulargewicht von 400 bis 12 000 und eine Funktionalität von vorzugsweise 2 bis 8, wobei Polyetherpolyole mit endständigen Hydroxylgruppen bevorzugt sind. Die Polyole werden im allgemeinen dadurch hergestellt, daß man an niedermolekulare, mehrwertige Alkohole, wie Glycerin oder Trimethylolpropan, Ethylenoxid und/oder Propylenoxid anlagert.

Weitere Polyole sind dem Fachmann bekannt und können zum Beispiel der EP-A-0 380 993 entnommen werden.

Als Katalysator verwendet man im allgemeinen Amine, wie Triethylendiamin, Bis-(2-dimethylaminoethyl)-ether, N,N-Dimethylethanolamin, N,N,N',N'',N''-Pentamethyldiethylentriamin, N-Methylmorpholin, Dimethylbenzylamin, tertiäre Alkylphosphine, Zinn(II)-octoat, Dibutylzinn(IV)-laurat sowie Chelate von Metallen, wie z.B. Chelate des Acetylacetonats von Magnesium, Zirkon oder Nickel. Der Katalysator wird in Mengen von 0,01 bis 1,0 Gew.-Teilen, bezogen auf 100 Gew.-Teile Polyol, verwendet.

Weitere übliche Zusatzstoffe sind Flammschutzmittel, Füllstoffe, Pigmente, Weichmacher, Antistatika und Zellregulierungsmittel. Diese und weitere Hilfsmittel sind dem Fachmann bekannt.

In den folgenden Beispielen wird die Herstellung von Polyurethanweichschäumen nach dem Verfahren des Standes der Technik und dem erfindungsgemäßen Verfahren unter Anwendung verschiedener Rezepturen gezeigt. Es werden dabei die Eigenschaften der erhaltenen Schaumstoffe näher erläutert.

Hierbei werden folgende Produkte eingesetzt und Produktbezeichnungen verwendet:

Polyol A: handelsübliches Polyethertriol für die Herstellung von flexiblen Polyurethanschäumen nach dem Blockschaumverfahren mit ausschließlich sekundären OH-Endgruppen und einem Ethylenoxidgehalt von ca. 11 %, OHZ ≈ 48, MW ≈ 3500 g/Mol.

Polyol B: handelsübliches Polyethertriol für die Herstellung von flexiblen Polyurethanschäumen nach dem Blockschaumverfahren mit ausschließlich sekundären OH-Endgruppen auf der Basis von Propylenoxid, OHZ ≈ 56, MW ≈ 3000 g/Mol.

Polyol C: handelsübliches Polyethertriol für die Herstellung von flexiblen Polyurethanschäumen nach dem Formschaumverfahren mit ca. 50 bis 60 % primären OH-Endgruppen und einem Ethylenoxidgehalt von ca. 12 bis 14 %, OHZ ≈ 42, MW ≈ 4000 g/Mol.

TEGOSTAB® BF 2370 handelsüblicher, von der Firma Th. Goldschmidt AG, Essen, vertriebener Schaumstabilisator

| | |
|---|---|
| TEGOSTAB® B 4900 | handelsüblicher, von der Firma Th. Goldschmidt AG, Essen, vertriebener Schaumstabilisator |
| Niax® A 107 | handelsüblicher, von der Firma Union Carbide Corporation, VStA, vertriebener Aminkatalysator |
| TEGOAMIN® PTA | handelsüblicher, von der Firma Th. Goldschmidt AG, Essen vertriebener Aminkatalysator |

erfindungsgemäß verwendete

| | |
|---|---|
| Verbindung A | 1-Alkylamido-3-dimethylaminopropan-3-N-Oxid als 35 %ige Lösung in Wasser, wobei Alkyl = Gemisch von $C_7$ bis $C_{17}$ |
| Vergleichssubstanz I | entsprechend EP-A-0 358 282 im Handel unter dem Warenzeichen Carapor ® 2001 von der Firma Shell AG, Eschborn (Taunus), erhältlich |
| Vergleichssubstanz II | entsprechend DE-PS 40 29 081 im Handel unter dem Warenzeichen ORTEGOL ® 310 von der Firma Th. Goldschmidt AG, Essen, erhältlich |

Die Herstellung der Schaumstoffe erfolgt gemäß der sogenannten Methode der Handverschäumung. Dabei werden alle Komponenten bis auf das Polyisocyanat und gegebenenfalls das physikalische Treibmittel 60 Sekunden bei 1000 Umdrehungen/Minute vorgerührt. Anschließend werden das Polyisocyanat und gegebenenfalls das Treibmittel zugesetzt und weitere sieben Sekunden bei 2500 Umdrehungen/Minute gerührt.

Der Methode der Blockverschäumung entsprechend wird die flüssige Mischung dann in einen oben offenen Behälter der Abmessung 30 x 30 x 30 cm gegeben, so daß der Schaum frei aufsteigen kann.

Die Herstellung von Schaumteilen nach dem Formschaumverfahren erfolgt durch Einbringung des reaktionsfähigen Gemisches in eine auf 60 °C aufgeheizte, allseitig verschließbare Metallform der Abmessung 40 x 40 x 12 cm. Anschließend wird innerhalb von 10 Minuten auf 120 °C aufgeheizt und danach entformt.

Die Bestimmung der Schaumeigenschaften erfolgt nach 72stündiger Lagerung im Normklima, d.h. 23 ± 1 °C und 50 ± 2 % relative Luftfeuchtigkeit. Es werden die folgenden Eigenschaften bestimmt:

Das Raumgewicht ergibt sich durch exaktes Auswiegen und Ausmessen eines ca. 10 x 10 x 10 cm großen Schaumkörpers in kg/$m^3$.

Die Ermittlung der Stauchhärte erfolgt nach DIN 53 577 bei 40 %iger Stauchung.

Ermittlung der Luftdurchlässigkeit (Offenzelligkeit). Unter Luftdurchlässigkeit versteht man den Rückstau in einer Wassersäule, welcher entsteht, wenn ein gleichmäßiger Luftstrom von 8 l/min durch den Schaumkörper geleitet wird. Niedrige Werte (kleiner 50) bedeuten gute Luftdurchlässigkeit und damit eine gute Offenzelligkeit. Hohe Werte (größer 100) entsprechen dagegen einer hohen Anzahl geschlossener Zellen. Angestrebt wird eine möglichst hohe Offenzelligkeit.

Der Druckverformungsrest nach konstanter Verformung (DVR) ist das Verhältnis aus der Differenz der Probekörperhöhe vor und nach dem Zusammendrücken und der ursprünglichen Probekörperhöhe in Anlehnung an DIN 53 572.

Für die Durchführung der Prüfung sind folgende Bedingungen für die Zusammendrückung, die Temperatur und die Beanspruchungsdauer angewendet worden:

| | |
|---|---|
| DVR (trocken) | 50 %, 70 °C, 22 h |
| DVR (feucht) | 50 %, 50 °C, 22 h, 100 % relative Luftfeuchtigkeit. |

Beispiele 1 bis 5 und Vergleichsversuche I bis VI

Die Wirkungsweise der erfindungsgemäß zu verwendenden Aminoxide zur Herstellung von flexiblen Polyurethanschäumen mit verminderter Stauchhärte nach dem Blockschaumverfahren wird in den Beispielen 1 bis 5 verdeutlicht und die Ergebnisse mit Verbindungen des Standes der Technik verglichen; siehe Vergleichsversuche I bis VI in Tabelle 1.

Bei Verwendung von 4,0 Gew.-Teilen Wasser erhält man einen Schaum im Raumgewicht 24 kg/$m^3$ und einer Stauchhärte von 3,0 kPa (Vergleichsversuche I und II). Das gleiche Raumgewicht wird erzielt, wenn man 3,3 Gew.-Teile Wasser in Kombination mit 7 Gew.-Teilen Trichlorfluormethan einsetzt, jedoch ist dieser Schaum deutlich weicher (Stauchhärte 2,0 kPa, Vergleichsversuch III). Ähnliches gilt für die Verwendung von Methylenchlorid (Vergleichsversuch IV). Um sowohl das Raumgewicht als auch die niedrige Stauchhärte ohne Mitverwendung von physikalischen Treibmitteln zu erhalten, ist der höhere Wassergehalt des Beispieles 1 und die Verwendung der erfindungsgemäßen Verbindungen erforderlich (Beispiele 1 bis 5).

Es können somit ca. 7 Gew.-Teile an physikalischem Treibmittel durch die Kombination eines höheren Wassergehaltes und dem weichmachenden Additiv ersetzt werden.

Beispiel 5 zeigt, daß dies unabhängig von der Art des Polyols ist.

Der Vergleich mit den Vergleichsversuchen V und VI belegt, daß die weichmachende Wirkung der erfindungsgemäß zu verwendenden Aminoxide ebenso stark ausgeprägt ist wie bei den Vergleichssubstanzen I und II entsprechend dem Stand der Technik.

Der Tabelle ist weiterhin zu entnehmen, daß in allen Beispielen Schäume mit vergleichbar gutem Druckverformungsrest (trocken und feucht) bei gleichzeitig guter Offenzelligkeit resultieren.

Eine Beeinflussung des Verarbeitungsspieles findet somit nicht statt (Beispiele 1 bis 5).

Tabelle 1

Formulierungen (Blockschaum, Angaben in Gew.-%)

| Beispiel bzw. Vergleichsversuch | I | II | III | IV | 1 | 2 | 3 | 4 | 5 | V | VI |
|---|---|---|---|---|---|---|---|---|---|---|---|
| Polyol A | 100 | - | 100 | - | 100 | 100 | 100 | 100 | - | 100 | 100 |
| Polyol B | - | 100 | - | 100 | - | - | - | - | 100 | - | - |
| Wasser (gesamt) | 4,0 | 4,0 | 3,3 | 3,2 | 4,0 | 4,0 | 4,0 | 4,0 | 4,0 | 4,0 | 4,0 |
| TEGOSTAB® BF 2370 | 1,0 | 1,0 | 1,0 | 1,0 | 1,0 | 1,0 | 1,0 | 1,0 | 1,0 | 1,0 | 1,0 |
| TEGOAMIN® PTA | 0,15 | 0,17 | 0,22 | 0,22 | 0,15 | 0,15 | 0,15 | 0,15 | 0,17 | 0,15 | 0,15 |
| Zinn(II)-octoat | 0,20 | 0,20 | 0,20 | 0,20 | 0,20 | 0,20 | 0,20 | 0,20 | 0,20 | 0,20 | 0,20 |
| Verbindung A | - | - | - | - | 0,4 | 1,0 | 2,0 | 3,0 | 3,0 | - | - |
| Vergleichssubstanz I | - | - | - | - | - | - | - | - | - | 0,6 | - |
| Vergleichssubstanz II | - | - | - | - | - | - | - | - | - | - | 1,0 |
| Trichlorfluormethan | - | - | 7 | - | - | - | - | - | - | - | - |
| $CH_2Cl_2$ | - | - | - | 8 | - | - | - | - | - | - | - |
| TDI 80 | 48,3 | 49,7 | 41,2 | 41,6 | 48,3 | 48,3 | 48,3 | 48,3 | 49,7 | 48,3 | 48,3 |
| Raumgewicht (kg/m³) | 24,0 | 24,1 | 23,9 | 23,7 | 24,0 | 24,1 | 24,1 | 24,0 | 24,2 | 24,0 | 24,1 |
| Stauchhärte (kPa) | 3,0 | 3,0 | 2,0 | 1,8 | 2,6 | 2,5 | 2,3 | 2,1 | 2,0 | 2,0 | 2,0 |
| Offenzelligkeit | 17 | 26 | 13 | 20 | 16 | 14 | 9 | 8 | 10 | 7 | 18 |
| DVR (trocken) | 2 | 2 | 2 | 2 | 2 | 2 | 3 | 3 | 2 | 3 | 2 |
| DVR (feucht) | 4 | 4 | 3 | 3 | 3 | 4 | 4 | 5 | 4 | 4 | 5 |

Beispiele 6 und 7 und Vergleichsversuche VII bis XIX

Die Beispiele 6 und 7 bzw. die Vergleichsversuche VII und VIII sowie XIII bis XV zeigen, daß bei Verwendung der Verbindung A je nach Wassergehalt in der Formulierung fünf bzw. neun Teile Trichlorfluormethan ersetzt werden können. Eine Beeinträchtigung des Druckverformungsrestes sowohl trocken als auch feucht wird in dem angegebenen Konzentrationsbereich ebensowenig beobachtet wie eine Beeinträchtigung der Offenzelligkeit. In allen Fällen werden schrumpffreie Formteile erhalten. Die Ergebnisse sind aus Tabelle 2 ersichtlich.

Auch bei Verwendung der Vergleichssubstanzen I und II (Vergleichsversuche IX bis XII bzw. XVI bis XIX) ist eine weichmachende Wirkung bei allerdings stark erhöhtem Druckverformungsrest und vorhandener Schrumpfneigung aufgrund der erhöhten Geschlossenzelligkeit festzustellen. Die Vorteile der erfindungsgemäß verwendeten Aminoxide sind daher offensichtlich.

Tabelle 2

Formulierungen (Formschaum, Angaben in Gew.-%)

| Beispiel bzw. Vergleichsversuch | VII | 6 | VIII | IX | X | XI | XII | XIII |
|---|---|---|---|---|---|---|---|---|
| Polyol C | 100 | 100 | 100 | 100 | 100 | 100 | 100 | 100 |
| Wasser (gesamt) | 4,0 | 4,0 | 3,5 | 4,0 | 4,0 | 4,0 | 4,0 | 5,5 |
| TEGOSTAB® B 4900 | 2,0 | 2,0 | 2,0 | 2,0 | 2,0 | 2,0 | 2,0 | 2,0 |
| N-Methylmorpholin | 0,4 | 0,4 | 0,4 | 0,4 | 0,4 | 0,4 | 0,4 | 0,4 |
| Niax® A 107 | 0,4 | 0,4 | 0,4 | 0,4 | 0,4 | 0,4 | 0,4 | 0,4 |
| N,N-Dimethylcetylamin | 0,4 | 0,4 | 0,4 | 0,4 | 0,4 | 0,4 | 0,4 | 0,4 |
| Zinn(II)-octoat | 0,15 | 0,15 | 0,15 | 0,15 | 0,15 | 0,15 | 0,15 | 0,15 |
| Verbindung A | - | 1,0 | - | - | - | - | - | - |
| Vergleichssubstanz I | - | - | - | 0,3 | 0,6 | - | - | - |
| Vergleichssubstanz II | - | - | - | - | - | 0,2 | 0,6 | - |
| Trichlorfluormethan | - | - | 5 | - | - | - | - | - |
| TDI 80 | 45,2 | 45,2 | 40,3 | 45,2 | 45,2 | 45,2 | 45,2 | 59,7 |
| Raumgewicht ($kg/m^3$) | 26,8 | 26,9 | 26,6 | 26,8 | 26,7 | 26,9 | 26,6 | 18,8 |
| Stauchhärte (kPa) | 3,0 | 2,5 | 2,5 | 2,7 | nicht | 2,6 | nicht | 2,9 |
| DVR (trocken) | 4 | 4 | 7 | 15 | bestimm- | 13 | bestimm- | 8 |
| DVR (feucht) | 7 | 6 | 13 | 40 | bar | 42 | bar | 18 |
| Offenzelligkeit | 200 | 80 | 280 | > 300 | >> 300 | > 300 | >> 300 | 150 |
| Schrumpfverhalten | i.O. | i.O. | i.O. | schwach | sehr stark | schwach | sehr stark | i.O. |

Tabelle 2 - Fortsetzung

Formulierungen (Formschaum, Angaben in Gew.-%)

| Beispiel bzw. Vergleichsversuch | 7 | XIV | XV | XVI | XVII | XVIII | XIX |
|---|---|---|---|---|---|---|---|
| Polyol C | 100 | 100 | 100 | 100 | 100 | 100 | 100 |
| Wasser (gesamt) | 5,5 | 4,8 | 4,5 | 5,5 | 5,5 | 5,5 | 5,5 |
| TEGOSTAB® B 4900 | 2,0 | 2,0 | 2,0 | 2,0 | 2,0 | 2,0 | 2,0 |
| N-Methylmorpholin | 0,4 | 0,4 | 0,4 | 0,4 | 0,4 | 0,4 | 0,4 |
| Niax® A 107 | 0,4 | 0,4 | 0,4 | 0,4 | 0,4 | 0,4 | 0,4 |
| N,N-Dimethylcetylamin | 0,4 | 0,4 | 0,4 | 0,4 | 0,4 | 0,4 | 0,4 |
| Zinn(II)-octoat | 0,15 | 0,15 | 0,15 | 0,15 | 0,15 | 0,15 | 0,15 |
| Verbindung A | 2,5 | - | - | - | - | - | - |
| Vergleichssubstanz I | - | - | - | 0,4 | 0,6 | - | - |
| Vergleichssubstanz II | - | - | - | - | - | 0,2 | 0,6 |
| Trichlorfluormethan | - | 7 | 9 | - | - | - | - |
| TDI 80 | 59,7 | 52,9 | 50,9 | 59,7 | 59,7 | 59,7 | 59,7 |
| Raumgewicht (kg/m³) | 18,8 | 18,2 | 18,5 | 18,7 | 18,4 | 18,6 | 18,8 |
| Stauchhärte (kPa) | 2,0 | 2,2 | 2,0 | 2,3 | nicht | 2,4 | nicht |
| DVR (trocken) | 8 | 11 | 13 | 19 | bestimm- | 17 | bestimm- |
| DVR (feucht) | 16 | 15 | 20 | 45 | bar | 46 | bar |
| Offenzelligkeit | 13 | 130 | 250 | > 300 | >> 300 | > 300 | >> 300 |
| Schrumpfverhalten | i.O. | i.O. | i.O. | mittel | sehr stark | mittel | sehr stark |

i.O. = in Ordnung, kein Schrumpf

## Patentansprüche

1. Verfahren zur Herstellung von heißhärtenden, flexiblen, Urethangruppen aufweisenden Schaumstoffen mit verminderter Stauchhärte durch Umsetzung von mindestens zwei Hydroxylgruppen aufweisenden Polyethern eines Molekulargewichtes von 400 bis 12 000 mit Polyisocyanaten in Gegenwart von Katalysatoren und Wasser und gegebenenfalls in Gegenwart von Emulgatoren, Stabilisatoren, Vernetzungsmitteln, Treibmitteln und üblichen Hilfs- und Zusatzstoffen, dadurch gekennzeichnet, daß man das

Verfahren in Gegenwart von 0,01 bis 3 Gew.-Teilen, bezogen auf 100 Gew.-Teile Polyol, Aminoxiden der allgemeinen Formel

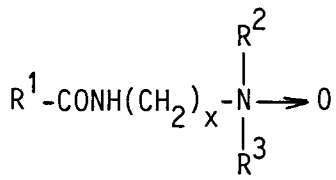

wobei

| | |
|---|---|
| $R^1$ | ein Alkylrest oder ein Gemisch von Alkylresten mit 7 bis 17 Kohlenstoffatomen ist, |
| $R^2$, $R^3$ | Alkylreste mit 1 bis 4 Kohlenstoffatomen sind und |
| x = | 2 oder 3 ist, |

durchführt.

2. Verfahren nach Anspruch 1, dadurch gekennzeichnet, daß man 0,01 bis 1,5 Gew.-Teile Aminoxid verwendet.

3. Verfahren nach Anspruch 1 oder 2, dadurch gekennzeichnet, daß man ein Aminoxid verwendet, bei dem $R^1$ ein Gemisch von Alkylresten mit 7 bis 17 Kohlenstoffatomen, abgeleitet von dem Fettsäuregemisch der Kokosfettsäure ist, $R^2$ und $R^3$ Methylreste sind und x einen Wert von 3 hat.

4. Verfahren nach Anspruch 1 oder 2, dadurch gekennzeichnet, daß man das Aminoxid oder dessen konzentrierte wäßrige Lösung dem Verschäumungsansatz separat oder der Aktivatorlösung, bestehend aus Wasser, Stabilisator und Aminkatalysator, oder dem Polyol oder einer Teilmenge eines Polyols zugibt.

## Claims

1. Process for the preparation of thermocuring, flexible, urethane group-containing foams of reduced compressive strength by reacting polyethers containing at least two hydroxyl groups and having a molecular weight of from 400 to 12,000 with polyisocyanates in the presence of catalysts and water and optionally in the presence of emulsifiers, stabilizers, crosslinking agents, blowing agents and conventional auxiliaries and additives, characterized in that the process is carried out in the presence of from 0.01 to 3 parts by weight, based on 100 parts by weight of polyol, of amine oxides of the general formula

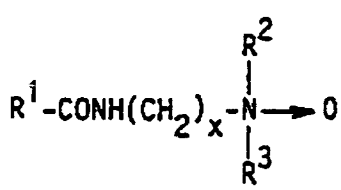

where

| | |
|---|---|
| $R^1$ | is an alkyl radical or a mixture of alkyl radicals having 7 to 17 carbon atoms, |
| $R^2$ and $R^3$ | are alkyl radicals having 1 to 4 carbon atoms, and |
| x | is 2 or 3. |

2. Process according to Claim 1, characterized in that from 0.01 to 1.5 parts by weight of amine oxide are used.

3. Process according to Claim 1 or 2, characterized in that an amine oxide is used in which $R^1$ is a mixture of alkyl radicals having 7 to 17 carbon atoms derived from the fatty acid mixture of coconut fatty acid, $R^2$ and $R^3$ are methyl radicals, and x has a value of 3.

4. Process according to Claim 1 or 2, characterized in that the amine oxide or the concentrated aqueous solution thereof is added separately to the foaming batch or is added to the activator solution comprising water, stabilizer and amine catalyst, or to the polyol or a part-amount of a polyol.

## Revendications

1. Procédé de fabrication de mousses souples, durcissables à chaude contenant des groupes d'uréthane, ayant une dureté réduite de compression, par réaction de polyéthers d'un poids moléculaire de 400 à 12 000, contenant au moins deux groupes hydroxyle, avec des polyisocyanates, en présence de catalyseurs et d'eau et éventuellement en présence d'émulsifiants, de stabilisants, d'agents de réticulation, d'agents moussants, ainsi que des agents auxiliaires et des additifs usuels, caractérisé en ce qu'on l'effectue en présence de 0,01 à 3 parties en poids, pour 100 parties en poids de polyols, d'oxydes d'amine de formule générale :

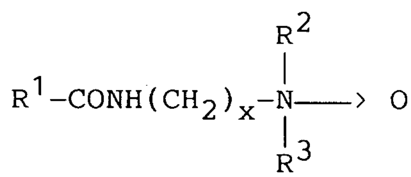

où

| | |
|---|---|
| $R^1$ | est un reste alkyle ou un mélange de restes alkyles ayant de 7 à 17 atomes de carbone, |
| $R^2$, $R^3$ | sont des restes alkyles ayant de 1 à 4 atomes de carbone, et |
| x = | 2 ou 3. |

2. Procédé selon la revendication 1, caractérisé en ce qu'on utilise 0,01 à 1,5 partie en poids d'oxyde d'amine.

3. Procédé selon la revendication 1 ou 2, caractérisé en ce qu'on utilise un oxyde d'amine dans lequel $R^1$ est un mélange de restes alkyles ayant de 7 à 17 atomes de carbone, dérivés du mélange d'acides gras de l'acide gras de coco, $R^2$ et $R^3$ représentent chacun un reste méthyle, et x vaut 3.

4. Procédé selon la revendication 1 ou 2, caractérisé en ce qu'on ajoute l'oxyde d'amine ou une solution aqueuse concentrée de celui-ci séparément à la solution de moussage, ou à la solution d'activateur formée d'eau, d'un stabilisant et d'un catalyseur aminé, ou au polyol ou à une quantité partielle d'un polyol.